# FASCICULE DE BREVET EUROPEEN

(11) **EP 2 191 126 B1**
(45) Date de publication et mention de la délivrance du brevet: **21.03.2012**
(21) Numéro de dépôt: 08857465.2
(22) Date de dépôt: 11.09.2008
(51) Int. Cl.: F02M 25/07

(54) **DISPOSITIF ET PROCÉDÉ DE RECIRCULATION DES GAZ D'ÉCHAPPEMENT D'UN MOTEUR THERMIQUE**
VORRICHTUNG UND VERFAHREN ZUR RÜCKFÜHRUNG VON ABGASEN EINES VERBRENNUNGSMOTORS
DEVICE AND METHOD FOR RECIRCULATING EXHAUST GASES OF AN INTERNAL COMBUSTION ENGINE

(30) Priorité: 12.09.2007 FR 0706403
(43) Date de publication de la demande: 02.06.2010
(73) Titulaire: Valeo Systèmes de Contrôle Moteur, 95892 Cergy Pontoise Cedex (FR)
(72) Inventeur: LEROUX, Samuel, F-78300 Poissy (FR); ALBERT, Laurent, 60640 VERDERIE (FR); ADENOT, Sébastien, F-95300 Pontoise (FR)
(86) Numéro de dépôt international: PCT/FR2008/001271
(87) Numéro de publication internationale: WO 2009/071754

(56) Documents cités:
- EP-A- 0 913 561
- EP-A- 2 025 912
- WO-A-2009/068504
- FR-A- 2 885 178
- US-A1- 2001 047 798

## Description

L'invention a trait au domaine automobile et concerne la gestion des gaz d'échappement des moteurs thermiques. Elle concerne plus particulièrement la recirculation des gaz d'échappement.

### ARRIÈRE PLAN DE L'INVENTION

Pour diminuer la pollution générée par un moteur thermique, il est connu de réinjecter des gaz d'échappement au niveau de l'admission. Ces dispositifs connus de recirculation des gaz d'échappement sont dénommés EGR pour « Exhaust Gaz Recirculation ».

Le document WO 00/77353 décrit une architecture de moteur thermique intégrant un tel dispositif EGR. Un conduit de recyclage relie le conduit d'échappement au conduit d'admission via une vanne de régulation de la quantité de gaz remis en circulation et via un échangeur de chaleur pour le refroidissement de ces mêmes gaz.

Les documents EP 0 913 561 et US 2001/047798 décrivent des dispositifs de récupération de chaleur des gaz d'échappement pour augmenter la température du moteur ou des composants de la ligne d'échappement.

Le document FR 2 885 178 décrit un dispositif permettant d'effectuer un nettoyage du circuit de recirculation des gaz d'échappement.

### OBJET DE L'INVENTION

L'invention a pour but d'améliorer ces dispositifs EGR en faisant remplir à l'échangeur de chaleur une fonction supplémentaire.

### BRÈVE DESCRIPTION DE L'INVENTION

A cet effet, l'invention vise un moteur thermique comprenant un dispositif de recirculation des gaz d'échappement comportant :
- un conduit de recyclage (13) adapté à être relié par l'une de ses extrémités au conduit d' échappement (5) d'un moteur (1) et par l'autre de ses extrémités au conduit d'admission (3) dudit moteur pour réinjecter des gaz d'échappement dans le conduit d'admission (3) ;
- un échangeur de chaleur (16) disposé sur le trajet du conduit de recyclage (13) pour le refroidissement des gaz recyclés, ledit échangeur de chaleur (16) comportant des canalisations d' entrée/sortie (21) adaptées à faire circuler un fluide caloporteur entre l'échangeur (16) et un radiateur d'habitacle ;
ledit conduit de recyclage (13) comportant, en aval de l'échangeur de chaleur (16), un embranchement de déviation (17) relié à un conduit de déviation (19) et ledit moteur comprenant une unité de contrôle moteur permettant:
- la détermination d'un besoin en apport calorifique du fluide caloporteur au niveau dudit radiateur d'habitacle ;
- l'activation d'une vanne commandant le flux dans le conduit de déviation (19) en fonction dudit besoin.

Un tel dispositif de recyclage permet, en plus d'assurer sa fonction première de recyclage des gaz d'échappement, de mettre en service l'échangeur de chaleur même si aucun gaz d'échappement n'est admis à être recyclé dans l'admission. Les gaz d'échappement peuvent ainsi être admis à circuler en continu dans l'échangeur de chaleur sans pour autant être réinjectés dans l'admission. Autrement dit, grâce à l'invention, il est possible d'utiliser l'échangeur comme source de chaleur même lorsque le dispositif de recyclage n'est pas activé. L'échangeur de chaleur assure ainsi une double fonction : refroidir les gaz recyclés lorsque nécessaire et fournir une source de chaleur disponible à tout moment.

L'embranchement de déviation est relié à un conduit de déviation de sorte que le dispositif de recirculation comporte deux voies de sortie possibles en aval de l'échangeur de chaleur : le conduit de recyclage et le conduit de déviation.

Selon une caractéristique préférée, le dispositif comporte une première vanne de fermeture pour le conduit de déviation et/ou une deuxième vanne de fermeture dans le conduit de recyclage, permettant ainsi de sélectionner et de régler les flux circulant dans le conduit de déviation et dans le conduit de recyclage en aval de l'échangeur.

Une vanne trois voies peut être avantageusement prévue pour regrouper lesdites première et deuxième vannes ainsi que l'embranchement de déviation.

L'échangeur de chaleur peut comporter des canalisations d'entrée/sortie adaptées à faire circuler un fluide caloporteur entre l'échangeur et un dispositif de production de chaleur, de manière à se servir de ce dispositif de production de chaleur comme d'une source de chaleur adaptable à un quelconque endroit du véhicule et alimentée par la chaleur des gaz d'échappement.

Selon une caractéristique préférée de ce moteur thermique, le conduit de déviation est relié au conduit d'échappement. Les gaz d'échappement terminent ainsi leur trajet dans le conduit d'échappement qu'ils aient été ou non admis à circuler dans le conduit de déviation, ce qui évite de prévoir pour le conduit de déviation une sortie spécifique, distincte du conduit d'échappement.

Ce moteur thermique peut en outre comporter un catalyseur d'oxydation, le conduit de recyclage étant relié au conduit d'échappement en aval du catalyseur d'oxydation, ce qui permet de bénéficier de la réduction des hydrocarbures procurée par le catalyseur d'oxydation pour les gaz traversant l'échangeur, et ce en vue d'éviter les phénomènes de collage et d'encrassement de l'échangeur et des éventuelles vannes disposées en aval.

Ce moteur thermique peut également comporter au moins un élément choisi parmi un catalyseur de réduction, un piège à oxyde d'azote et un filtre à particules, le conduit de recyclage étant relié au conduit d'échappement en amont dudit élément, ce qui évite d'introduire une perte de charge supplémentaire dans le conduit d'échappement.

Le conduit de déviation peut de plus être relié au conduit d'échappement en aval dudit élément.

Selon une caractéristique préférée lorsque le moteur thermique comporte en outre un turbocompresseur, le conduit de recyclage peut être relié par l'une de ses extrémités au conduit d'échappement en aval de la turbine du turbocompresseur et être également relié par l'autre de ses extrémités au conduit d'admission en amont du compresseur du turbocompresseur. Le dispositif de recirculation fonctionne ainsi en basse pression.

Un autre objet de l'invention vise un procédé de gestion des gaz d'échappement d'un moteur thermique tel que décrit ci-dessus, le refroidissement des gaz recyclés étant réalisé par un fluide caloporteur relié au radiateur d'habitacle au radiateur d'habitacle caractérisé en ce qu'il comporte les étapes suivantes :
- détermination du besoin en apport calorifique du fluide caloporteur au niveau dudit dispositif de production de chaleur ;
- activation d'une vanne commandant le flux dans le conduit de déviation en fonction dudit besoin.

Un tel procédé peut mettre en oeuvre des capteurs classiques reliés à une unité de contrôle moteur (« ECU »). Lorsque ces capteurs indiquent à l'ECU qu'un apport de chaleur est souhaité au niveau dudit dispositif de production de chaleur, l'ECU commande alors ladite vanne entre une position totalement fermée (si un flux conséquent de gaz d'échappement est déjà en recirculation vers l'admission) et une position totalement ouverte (si aucun gaz d'échappement n'est admis à recirculer).

Un autre objet de l'invention vise un module de recirculation des gaz d'échappement adapté à un dispositif de recirculation des gaz d'échappement tel que décrit ci-dessus, caractérisé en ce qu'il comporte :
- un échangeur de chaleur muni d'un raccord pour son branchement sur le conduit de recyclage ;
- une vanne trois voies comportant une entrée reliée à l'échangeur de chaleur et un embranchement de déviation relié à deux sorties munies chacune d'un raccord pour leur liaison respectivement au conduit de déviation et au conduit de recyclage.

Un tel module peut être avantageusement produit sous la forme d'un sous-ensemble autonome intégrable comme composant dans une architecture moteur.

### BRÈVE DESCRIPTION DES DESSINS

L'invention sera mieux comprise à la lumière de la description qui va suivre d'un mode de réalisation préféré et non limitatif, description faite en référence aux dessins annexés, parmi lesquels :
- la figure 1 est une vue schématique d'une architecture de moteur thermique comportant un dispositif de recirculation des gaz d'échappement selon un premier mode de réalisation de l'invention ;
- la figure 2 est une vue de détail de l'encadré II de la figure 1 ;
- la figure 3 est une vue schématique d'une architecture de moteur thermique comportant un dispositif de recirculation des gaz d'échappement selon un deuxième mode de réalisation de l'invention ;
- la figure 4 est une vue de détail de l'encadré IV de la figure 3 ;
- la figure 5 représente une variante du mode de réalisation de la figure 3 ;
- la figure 6 est une vue de détail de l'encadré VI de la figure 5 ;
- la figure 7 représente une deuxième variante du mode de réalisation de la figure 3 ;
- la figure 8 est une vue schématique d'une architecture de moteur thermique comportant un dispositif de recirculation des gaz d'échappement selon un troisième mode de réalisation de l'invention.

### DESCRIPTION DETAILLÉE DE L'INVENTION

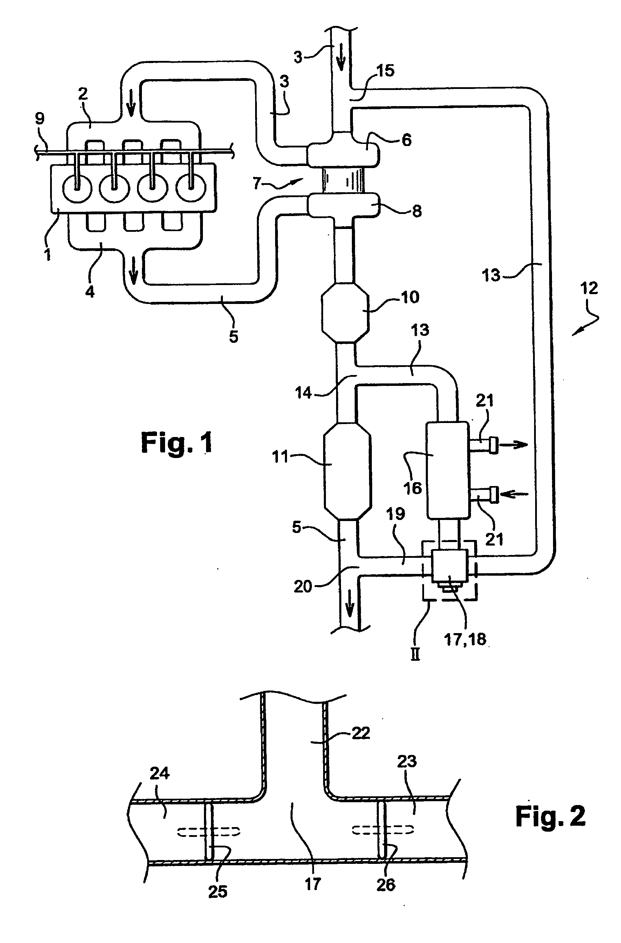

La figure 1 représente une architecture moteur simplifiée montrant un moteur muni d'un dispositif de recirculation « EGR ».

Le bloc moteur 1 est schématiquement représenté en vue de dessus. Il est desservi par un collecteur d'admission 2 relié à un conduit d'admission 3 et par un collecteur d'échappement 4 relié à un conduit d'échappement 5. Dans le présent exemple, le moteur est suralimenté et le conduit d'admission 3 passe donc par le compresseur 6 d'un turbocompresseur 7 tandis que le conduit d'échappement 5 passe par la turbine 8 du même turbocompresseur 7.

Pour l'alimentation en mélange air-carburant du moteur 1, le conduit d'admission 3 est destiné à être relié par son extrémité libre à un filtre à air (non représenté) tandis qu'un dispositif classique de type injection 9 est prévu.

Le conduit d'échappement 5 comporte quant à lui, dans le présent exemple, un pot d'échappement catalytique comportant un catalyser d'oxydation 10 et, en aval de ce dernier, un catalyser de réduction 11. Le catalyseur d'oxydation peut par ailleurs être remplacé par un catalyseur à amorçage rapide et le catalyseur de réduction par un catalyseur trois voies. Le catalyseur d'oxydation 10 du présent exemple sera avantageusement à structure métallique plutôt que céramique de façon à réduire le risque d'endommagement du compresseur 6 par des particules.

Le dispositif de recirculation 12 comporte un conduit de recyclage 13 qui est relié par l'une de ses extrémités, au niveau d'un premier embranchement 14, au conduit d'échappement 5, ce premier embranchement 14 étant situé entre les catalyseurs d'oxydation 10 et de réduction 11 ; et qui est relié par l'autre de ses extrémités, au niveau d'un deuxième embranchement 15, au conduit d'admission 3.

Ce conduit de recyclage 13 comporte sur son trajet un échangeur de chaleur 16 ainsi qu'un troisième embranchement 17, dénommé « embranchement de déviation » au niveau duquel est disposée une vanne trois voies 18. Le troisième embranchement 17 relie le conduit de recyclage 13 à un conduit de déviation 19 qui, dans le présent exemple, se branche sur le conduit d'échappement 5 au niveau d'un quatrième embranchement 20, ce dernier étant situé en aval du catalyseur de réduction 11.

On entend par « vanne trois voies » une vanne comportant une voie d'entrée et deux voies de sorties et adaptée à diriger le flux d'entrée vers l'une, l'autre, ou les deux des voies de sortie de manière réglable. La figure 2 représente schématiquement les éléments constitutifs de la vanne 18. La vanne trois voies 18 du présent exemple intègre le troisième embranchement 17 dans la mesure où elle comporte en interne une voie d'entrée 22 provenant de l'échangeur de chaleur 16 via le conduit de recirculation 13 et un embranchement 17 menant vers deux voies de sortie 23, 24 respectivement vers le conduit de recyclage 13 et vers le conduit de déviation 19. Dans chacune des voies de sortie est disposée une vanne formée ici par un papillon 25, 26 qui peut soit être adapté à prendre une quelconque position entre l'ouverture et la fermeture du conduit correspondant, soit fonctionner en « tout ou rien » (ouvert ou fermé). Ces papillons 25, 26 sont commandés de manière classique par un moteur électrique (non représenté) lui-même piloté par un module électronique de commande (non représenté), en général dénommé « ECU » (« Electronic Control Unit ») qui pilote également les papillons des gaz, les injecteurs et divers autres actionneurs.

L'échangeur de chaleur 16 est de plus relié à des canalisations d'entrée/sortie 21 adaptées à faire circuler un fluide caloporteur dans l'échangeur 16. Les gaz d'échappement traversant l'échangeur 16 sont ainsi refroidis à mesure que ledit fluide caloporteur se réchauffe. Les canalisations 21 sont avantageusement reliées à tout dispositif classique produisant de la chaleur à partir d'un fluide chaud (par exemple un radiateur d'habitacle ou un dispositif pour accélérer le réchauffement moteur lors d'un départ à froid).

L'ECU indiquée plus haut peut prendre en charge, via des capteurs classiques, la détection du besoin en production de chaleur.

Le dispositif de recirculation qui vient d'être décrit fonctionne de la manière indiquée ci-après.

Les gaz brûlés sont évacués du moteur 1 par le collecteur d'échappement 4 sous haute pression et parcourent le conduit d'échappement 5 jusqu'au turbocompresseur 7 où leur énergie est utilisée pour mettre en rotation la turbine 8. Ces gaz brûlés, en sortant du turbocompresseur 7 continuent leur parcours sous basse pression le long du conduit d'échappement 5 jusqu'à traverser le catalyseur d'oxydation 10 et le catalyseur de réduction 11 pour ensuite être évacués par le silencieux du pot d'échappement (non représenté) du véhicule.

La position des papillons 25, 26 de la vanne trois voies 18 détermine si le dispositif de recirculation est actif :
- si les deux papillons 25, 26 ferment les deux voies de sortie 23, 24 de la vanne 18, aucun gaz n'est en mouvement dans le dispositif de recirculation 12, pas plus que dans le conduit de déviation 19 ;
- si le papillon 25 correspondant au conduit de déviation 19 est fermé et que le papillon 26 correspondant au conduit de recyclage 13 est au moins partiellement ouvert, le dispositif de recirculation fonctionne de manière classique en réinjectant des gaz brûlés à l'admission ;
- si le papillon 26 correspondant au conduit de recyclage 13 est fermé et que le papillon 25 correspondant au conduit de déviation 19 est au moins partiellement ouvert, le dispositif de recirculation 12 est inactif, aucun gaz brûlé n'étant réinjecté à l'admission, tandis que les gaz d'échappement traversent quand même l'échangeur et réchauffent le fluide caloporteur en vue d'utiliser le dispositif chauffant auquel il est relié. Il est ainsi possible d'employer la capacité de l'échangeur 16 à produire de la chaleur à partir des gaz d'échappement alors qu'aucun gaz n'est réinjecté à l'admission ;
- Si les deux papillons 25, 26 sont au moins partiellement ouverts, le dispositif de recirculation 12 est actif tandis que le flux de gaz d'échappement permettant de réchauffer le fluide caloporteur de l'échangeur 16 correspond au flux réinjecté à l'admission additionné du flux traversant le conduit de déviation 19. Un meilleur rendement dans la production de chaleur par l'échangeur 16 est ainsi obtenu.

L'ECU commande la position des papillons 25, 26 en fonction du besoin en apport calorifique du dispositif chauffant auquel est relié l'échangeur 16.

Des variantes du mode de réalisation décrit peuvent être mises en oeuvre sans pour autant sortir du cadre de l'invention. Notamment, la vanne trois voies 18 peut être remplacée par deux vannes classiques correspondant aux deux papillons 25, 26, disposées l'une sur le conduit de déviation 19 et l'autre sur le conduit de recyclage 13. De même, le conduit de déviation 19 peut mener ailleurs que dans le conduit d'échappement 5, il peut par exemple déboucher dans un conduit d'évacuation dédié, distinct du pot d'échappement.

En ce qui concerne, la position du premier embranchement 14, celui-ci peut être placé ailleurs sur le conduit d'échappement 5, que ce soit en amont ou en aval des catalyseurs.

Le catalyseur de réduction 11 peut être complété ou remplacé par un piège à oxyde d'azote ou un filtre à particules.

Bien que le présent mode de réalisation se réfère à un dispositif de recirculation fonctionnant en basse pression vis-à-vis du turbocompresseur 7, il est également envisageable de l'adapter au fonctionnement en haute pression, le conduit de recyclage 13 étant alors relié au conduit d'admission 3 en aval du compresseur 6 et au conduit d'échappement 5 en amont de la turbine 8.

De même, le dispositif de recirculation peut être adapté à une architecture moteur sans turbocompresseur.

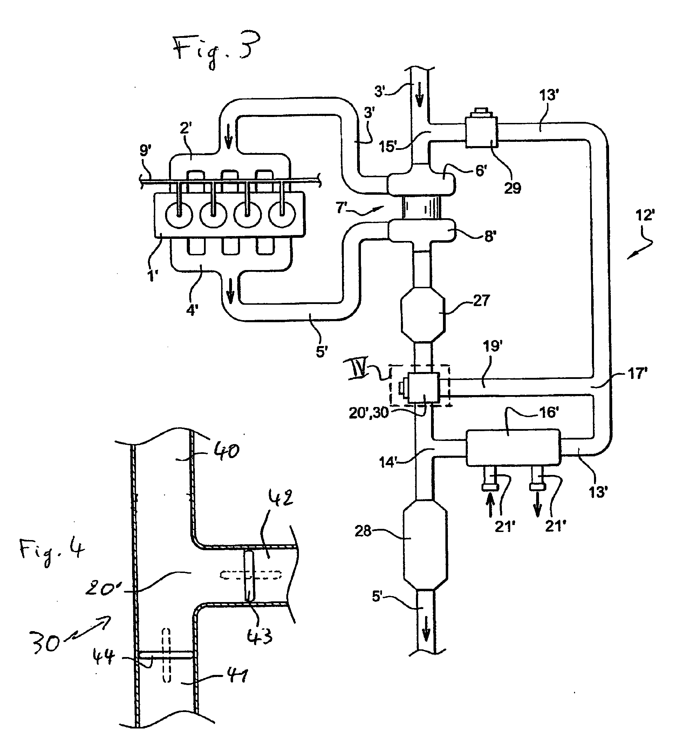

La figure 3 montre un deuxième mode de réalisation de l'invention. Les éléments ayant la même fonction que ceux du premier mode de réalisation portent les mêmes numéros de renvoi suivis d'un prime (').

Selon ce deuxième mode de réalisation, le premier embranchement 14' est situé entre un catalyseur 27, par exemple un DOC (« Diesel Oxydation Catalyser ») et un filtre à particules 28 tous deux disposés sur le conduit d'échappement 5'. Le conduit de recyclage 13', qui part de ce premier embranchement 14', comporte une vanne 29 classique avant l'embranchement 15' le reliant au conduit d'admission 3'. Le conduit de déviation 19' part de l'embranchement de déviation 17' pour aboutir au quatrième embranchement 20' qui est situé entre le catalyseur 27 et le filtre à particules 28, en amont du premier embranchement 14'. Une vanne 30 porte cet embranchement 20' ainsi qu'un dispositif à papillons adapté à fermer et ouvrir le conduit de déviation 19' et/ou le conduit d'échappement 5'. La vanne 30, représentée à la figure 4, peut également être une vanne trois voies dont l'entrée 40 est reliée au catalyseur 27, une sortie 41 est reliée à l'embranchement 14' et une sortie 42 est reliée au conduit de déviation 19'. Des papillons 43, 44 sont disposés respectivement dans les sorties 42 et 41. Lorsque cette vanne 30 ferme le conduit d'échappement 5' et ouvre le conduit de déviation 19', tous les gaz d'échappement sont admis à circuler dans l'échangeur 16', permettant ainsi à l'échangeur de remplir sa fonction d'apport de chaleur. Dans cette configuration, une partie de ces gaz d'échappement peut toujours être admise à recirculer dans l'admission grâce à l'ouverture de la vanne 29.

La vanne 30 est adaptée à fermer le conduit d'échappement 5' grâce au papillon 44 disposé entre l'embranchement 20' et l'embranchement 14'.

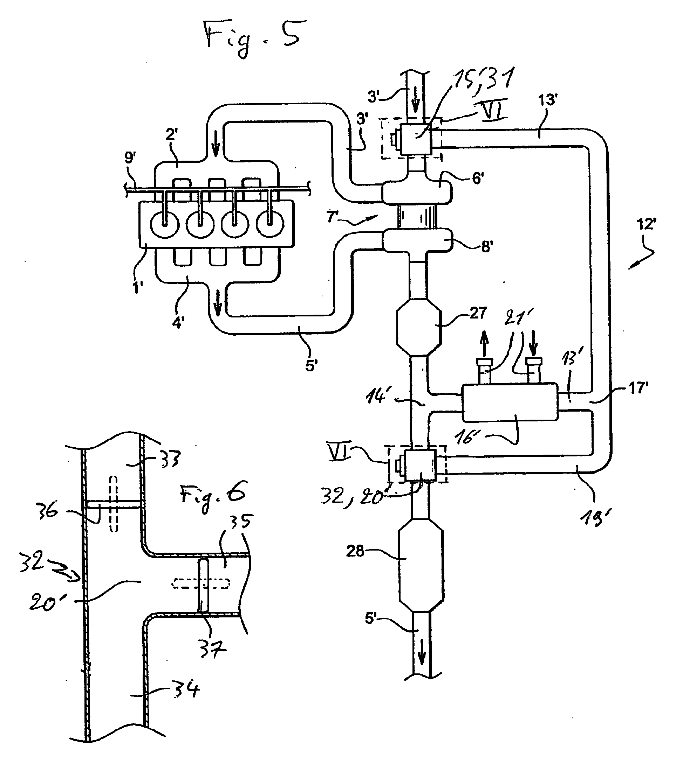

En variante de ce deuxième mode de réalisation, il est possible d'intervertir l'ensemble formé du conduit de déviation 19 et de la vanne 30 avec l'ensemble formé du conduit 13'et de l'échangeur 16', conformément à la figure 5 sur laquelle les mêmes numéros de référence sont attribués aux éléments analogues. Selon cette variante, une vanne 32 conforme à la figure 6 est disposée sur l'embranchement 20', avec son entrée 33 reliée à l'embranchement 14', une sortie 34 reliée au filtre à particules 28 et une sortie 35 reliée au conduit de déviation 19'. Des papillons 36, 37 sont prévus respectivement dans l'entrée 33 et la sortie 35.

Une vanne 31 est de plus disposée à l'embranchement 15'. Cette vanne 31 est identique à la vanne 32 et peut donc être décrite en référence à la figure 6 en employant les mêmes numéros de référence. L'entrée 33 de la vanne 32 est reliée au conduit d'admission 3', une sortie 34 est reliée au compresseur 6' et une sortie 35 est reliée au conduit de recyclage 13'.

La vanne 31 remplit, dans le présent exemple, une fonction de doseur d'air d'admission grâce au papillon 36, comme le fait classiquement le boîtier papillon d'un moteur essence ou le doseur d'un moteur Diesel, tandis que le papillon 37 lui permet également de remplir la fonction de régulation EGR.

La vanne 32, quant à elle, rempli la fonction de volet de contre-pression à l'échappement grâce à son papillon 36, tandis que le papillon 37 permet ou non le retour des gaz issus de l'échangeur 16' vers le conduit d'échappement 5'.

Ainsi, lorsque l'on désire pratiquer la recirculation de gaz d'échappement à l'admission, le papillon 36 de la vanne 32 est au moins partiellement fermé, pour que des gaz d'admission passent dans l'échangeur 16, tandis que le papillon 37 de la vanne 31 régule de manière classique le taux de gaz d'échappement à réinjecter dans l'admission. Le surplus de gaz d'échappement peut être redirigé vers le conduit d'échappement 5' par la commande du papillon 37 de la vanne 32. Le papillon 36 de la vanne 31 est pendant ce temps commandé de manière classique comme boîtier papillon ou doseur d'air.

Si l'on veut profiter de la récupération de chaleur à l'échangeur 16' sans mettre en oeuvre l'EGR, les papillons 36 et 37 de la vanne 32 sont, au moins partiellement, respectivement fermé et ouvert tandis que le papillon 37 de la vanne 31 reste fermé.

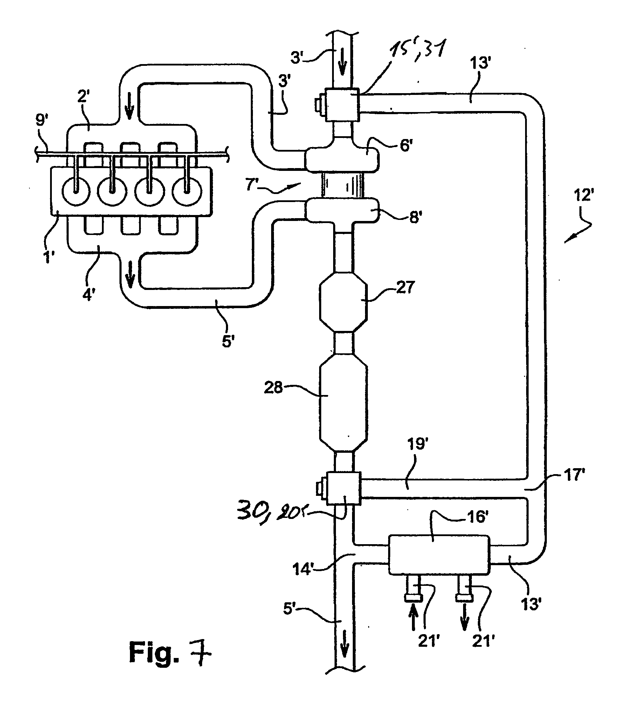

La figure 7 représente une autre variante de ce deuxième mode de réalisation (les mêmes numéros de référence sont utilisés pour les éléments analogues). Le catalyseur 27 et le filtre à particule 28 sont ici reliés l'un à l'autre et sont disposés sur le conduit d'échappement avant les embranchements 20' et 14'. Les conduits de déviation 19' et de recirculation 13' ont la même disposition qu'à la figure 3, avec la présence de la vanne 30. Une vanne 31 à double fonction est également prévue comme à la figure 5.

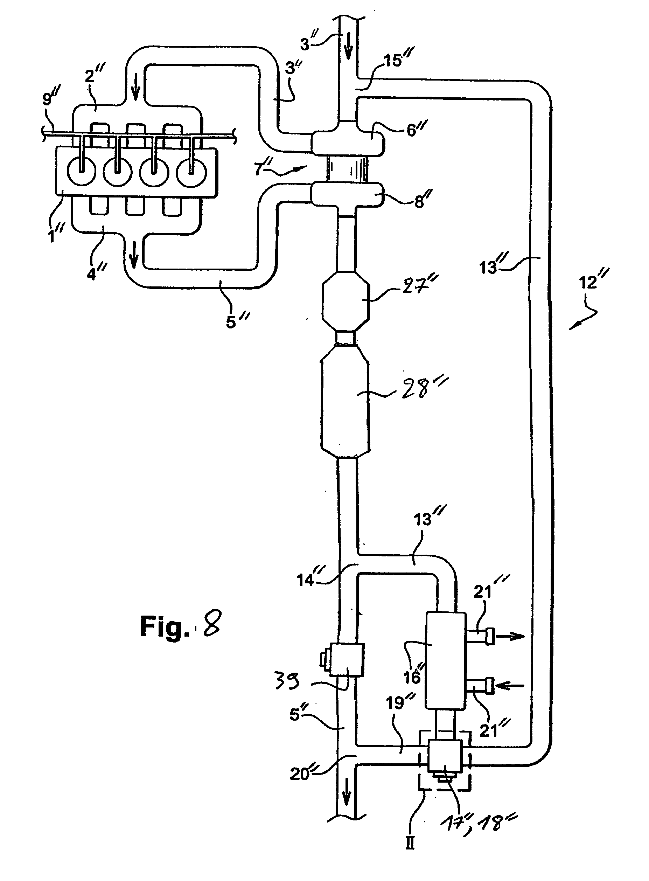

Un troisième mode de réalisation est illustré à la figure 8. Chaque élément analogue dans les modes de réalisation précédents porte le même numéros de référence suivi d'un seconde ("). Ici également, le catalyseur 27" et le filtre à particule 28" sont reliés l'un à l'autre et sont disposés sur le conduit d'échappement 5" suivis par l'embranchement 14" puis une vanne 39 et enfin l'embranchement 20" . La vanne 39 est une vanne simple permettant d'ouvrir ou fermer, en « tout ou rien » ou partiellement, le conduit 5" . En parallèle de la vanne 39 s'étend l'échangeur 16" disposé sur le conduit de recyclage 13" et une vanne 18" (voir figure 2) est prévue sur l'embranchement 17. Cette vanne 18" permet de réinjecter à l'admission une quantité de gaz d'échappement définie par l'ouverture du volet 26 de la vanne 18", tandis que le volet 25 permet de rediriger les gaz d'échappement vers le conduit d'échappement, notamment pour faire de la récupération de chaleur à l'échangeur 16" . La vanne 39 permet de créer une contre pression favorisant le passage des gaz d'échappement dans l'échangeur 16" .

Dans les différentes réalisations décrites ci-dessus, les couples catalyseur d'oxydation 10, catalyseur de réduction 11 et catalyseur 27, filtre à particule 28 peuvent être utilisés indifféremment. De même, les différentes vannes trois voies décrites peuvent être réalisées classiquement par des conduits dans lesquels sont dûment disposés des volets ou soupapes.

## Revendications

1. Moteur thermique comprenant un dispositif de recirculation des gaz d'échappement comportant :
- un conduit de recyclage (13) adapté à être relié par l'une de ses extrémités au conduit d'échappement (5) dudit moteur (1) et par l'autre de ses extrémités au conduit d'admission (3) dudit moteur pour réinjecter des gaz d'échappement dans le conduit d'admission (3) ;
- un échangeur de chaleur (16) disposé sur le trajet du conduit de recyclage (13) pour le refroidissement des gaz recyclés, ledit échangeur de chaleur (16) comportant des canalisations d'entrée/sortie (21) adaptées à faire circuler un fluide caloporteur entre l'échangeur (16) et un radiateur d'habitacle ;
ledit conduit de recyclage (13) comportant, en aval de l'échangeur de chaleur (16), un embranchement de déviation (17) relié à un conduit de déviation (19) et ledit moteur comprenant une unité de contrôle moteur permettant:
- la détermination d'un besoin en apport calorifique du fluide caloporteur au niveau dudit radiateur d'habitacle ;
- l'activation d'une vanne commandant le flux dans le conduit de déviation (19) en fonction dudit besoin.

2. Moteur selon la revendication 1, **caractérisé en ce qu'**il comporte une première vanne (25) de fermeture pour le conduit de déviation (19).

3. Moteur selon la revendication 2, **caractérisé en ce que** le conduit de recyclage (13) comporte une deuxième vanne (26) de fermeture.

4. Moteur selon la revendication 3, **caractérisé en ce qu'**il comporte une vanne trois voies (18) regroupant lesdites première (25) et deuxième (26) vannes ainsi que l'embranchement de déviation (17).

5. Moteur thermique selon la revendication 1, **caractérisé en ce que** le conduit de déviation (19) est relié au conduit d'échappement (5).

6. Moteur thermique selon l'une des revendications 1 à 5, comportant en outre un catalyseur d'oxydation (10), **caractérisé en ce que** le conduit de recyclage (13) est relié au conduit d'échappement (5) en aval du catalyseur d'oxydation (10).

7. Moteur thermique selon l'une des revendications 1 à 6 comportant en outre au moins un élément choisi parmi un catalyseur de réduction (11), un piège à oxyde d'azote et un filtre à particules, **caractérisé en ce que** le conduit de recyclage (13) est relié au conduit d'échappement (5) en amont dudit élément.

8. Moteur thermique selon la revendication 7, **caractérisé en ce que** le conduit de déviation (19) est relié au conduit d' échappement (5) en aval dudit élément.

9. Moteur thermique selon l'une des revendications 1 à 8, comportant en outre un turbocompresseur (7), **caractérisé en ce que** le conduit de recyclage (13) est relié par l'une de ses extrémités au conduit d'échappement (5) en aval de la turbine (8) du turbocompresseur (7) et **en ce qu'**il est également relié par l'autre de ses extrémités au conduit d'admission (3) en amont du compresseur (6) du turbocompresseur (7).

10. Procédé de gestion des gaz d' échappement d'un moteur thermique selon l'une des revendications 1 à 9, le refroidissement des gaz recyclés étant réalisé par un fluide caloporteur relié au radiateur d'habitacle, **caractérisé en ce qu'** il comporte les étapes suivantes :
- détermination du besoin en apport calorifique du fluide caloporteur au niveau dudit radiateur d'habitacle ;
- activation de la vanne commandant le flux dans le conduit de déviation (19) en fonction dudit besoin.

## Claims

1. Combustion engine comprising an exhaust gas recirculation device comprising:
- a recirculation pipe (13) designed to be connected by one of its ends to the exhaust pipe (5) of the said engine (1) and by the other of its ends to the intake pipe (3) of the said engine in order to reinject exhaust gases into the intake pipe (3);
- a heat exchanger (16) placed in the path of the recirculation pipe (13) for cooling the recirculated gases, the said heat exchanger (16) comprising inlet/outlet ducts (21) designed to cause a heat-transfer fluid to circulate between the exchanger (16) and a cabin heater;
the said recirculation pipe (13) comprising, downstream of the heat exchanger (16), a bypass tapping (17) connected to a bypass pipe (19) and the said engine comprising an engine control unit for:
- determining a need for the heat-transfer fluid to supply heat to the said cabin heater;
- activating a valve controlling the flow through the bypass pipe (19) as a function of the said need.

2. Engine according to Claim 1, **characterized in that** it comprises a first shut-off valve (25) for the bypass pipe (19).

3. Engine according to Claim 2, **characterized in that** the recirculation pipe (13) comprises a second shut-off valve (26).

4. Engine according to Claim 3, **characterized in that** it comprises a three-way valve (18) combining the said first (25) and second (26) valves and the bypass tapping (17).

5. Combustion engine according to Claim 1, **characterized in that** the bypass pipe (19) is connected to the exhaust pipe (5).

6. Combustion engine according to one of Claims 1 to 5, further comprising an oxidation catalytic converter (10), **characterized in that** the recirculation pipe (13) is connected to the exhaust pipe (5) downstream of the oxidation catalytic converter (10).

7. Combustion engine according to one of Claims 1 to 6 further comprising at least one element chosen from a reduction catalytic converter (11), a nitrogen oxide trap and a particulate filter, **characterized in that** the recirculation pipe (13) is connected to the exhaust pipe (5) upstream of the said element.

8. Combustion engine according to Claim 7, **characterized in that** the bypass pipe (19) is connected to the exhaust pipe (5) downstream of the said element.

9. Combustion engine according to one of Claims 1 to 8, further comprising a turbocharger (7), **characterized in that** the recirculation pipe (13) is connected by one of its ends to the exhaust pipe (5) downstream of the turbine (8) of the turbocharger (7) and **in that** it is also connected by the other of its ends to the inlet pipe (3) upstream of the compressor (6) of the turbocharger (7).

10. Method for controlling the exhaust gases of a combustion engine according to one of Claims 1 to 9, the cooling of the recirculated gases being performed by a heat-transfer fluid connected to the cabin heater, **characterized in that** it comprises the following steps:
- determining a need for the heat-transfer fluid to supply heat to the cabin heater;
- activating the valve controlling the flow through the bypass pipe (19) as a function of the said requirement.

## Patentansprüche

1. Verbrennungsmotor, der eine Abgasrückführvorrichtung enthält, die aufweist:
- eine Rückführleitung (13), die geeignet ist, um mit einem ihrer Enden mit der Auslassleitung (5) des Motors (1) und mit dem anderen ihrer Enden mit der Einlassleitung (3) des Motors verbunden zu werden, um Abgase wieder in die Einlassleitung (3) einzuspritzen;
- einen Wärmetauscher (16), der auf dem Weg der Rückführleitung (13) zur Kühlung der rückgeführten Gase angeordnet ist, wobei der Wärmetauscher (16) Eingangs-/Ausgangsrohrleitungen (21) aufweist, die geeignet sind, um ein Wärmeträgerfluid zwischen dem Tauscher (16) und einem Innenraum-Heizkörper fließen zu lassen;
wobei die Rückführleitung (13) hinter dem Wärmetauscher (16) eine Ablenkabzweigung (17) aufweist, die mit einer Ablenkleitung (19) verbunden ist, und der Motor eine Motorsteuereinheit enthält, die ermöglicht:
- die Bestimmung eines Wärmezufuhrbedarfs vom Wärmeträgerfluid im Bereich des Innenraum-Heizkörpers;
- die Aktivierung eines Schiebers, der die Strömung in der Ablenkleitung (19) abhängig vom Bedarf steuert.

2. Motor nach Anspruch 1, **dadurch gekennzeichnet, dass** er einen ersten Absperrschieber (25) für die Ablenkleitung (19) aufweist.

3. Motor nach Anspruch 2, **dadurch gekennzeichnet, dass** die Rückführleitung (13) einen zweiten Absperrschieber (26) aufweist.

4. Motor nach Anspruch 3, **dadurch gekennzeichnet, dass** er ein Dreiwegeventil (18) aufweist, das den ersten (25) und den zweiten (26) Schieber sowie die Ablenkabzweigung (17) zusammenfasst.

5. Verbrennungsmotor nach Anspruch 1, **dadurch gekennzeichnet, dass** die Ablenkleitung (19) mit der Auslassleitung (5) verbunden ist.

6. Verbrennungsmotor nach einem der Ansprüche 1 bis 5, der außerdem einen Oxidationskatalysator (10) aufweist, **dadurch gekennzeichnet, dass** die Rückführleitung (13) mit der Auslassleitung (5) hinter dem Oxidationskatalysator (10) verbunden ist.

7. Verbrennungsmotor nach einem der Ansprüche 1 bis 6, der außerdem mindestens ein Element aufweist, das ausgewählt wird unter einem Reduktionskatalysator (11), einer Stickoxidfalle und einem Partikelfilter, **dadurch gekennzeichnet, dass** die Rückführleitung (13) mit der Auslassleitung (5) vor dem Element verbunden ist.

8. Verbrennungsmotor nach Anspruch 7, **dadurch gekennzeichnet, dass** die Ablenkleitung (19) mit der Auslassleitung (5) hinter dem Element verbunden ist.

9. Verbrennungsmotor nach einem der Ansprüche 1 bis 8, der außerdem einen Turbokompressor (7) aufweist, **dadurch gekennzeichnet, dass** die Rückführleitung (13) mit einem ihrer Enden mit der Auslassleitung (5) hinter der Turbine (8) des Turbokompressors (7) verbunden ist, und dass sie ebenfalls mit dem anderen ihrer Enden mit der Einlassleitung (3) vor dem Kompressor (6) des Turbokompressors (7) verbunden ist.

10. Verfahren zur Verwaltung der Abgase eines Verbrennungsmotors nach einem der Ansprüche 1 bis 9, wobei die Kühlung der rückgeführten Gase durch ein Wärmeträgerfluid durchgeführt wird, das mit dem Innenraum-Heizkörper verbunden ist, **dadurch gekennzeichnet, dass** es die folgenden Schritte aufweist:
- Bestimmung des Wärmezufuhrbedarfs vom Wärmeträgerfluid im Bereich des Innenraum-Heizkörpers;
- Aktivierung des Schiebers, der die Strömung in der Ablenkleitung (19) abhängig vom Bedarf steuert.
